# EUROPÄISCHE PATENTANMELDUNG

(11) **EP 3 130 225 A1**
(43) Veröffentlichungstag der Anmeldung: **15.02.2017**
(21) Anmeldenummer: 16183652.3
(22) Anmeldetag: 11.08.2016
(51) Int. Cl.: A01K 27/00

(54) **LÄNGENVERSTELLBARES TIERHALSBAND**

(30) Priorität: 14.08.2015 DE 202015104303 U
(71) Anmelder: RTNTRD Rolf Trautwein und Nadine Trautwein Research & Development GbR, 33818 Leopoldshöhe (DE)
(72) Erfinder: Trautwein, Rolf, 33719 Bielefeld (DE)
(74) Vertreter: Bittner, Thomas L.

(57) **Zusammenfassung**

Die Offenbarung betrifft ein längenverstellbares Tierhalsband (1), mit einem Halsriemen (2), bei dem sich im geschlossenen Zustand ein innenliegender und ein außenliegender Riemenabschnitt (3, 4) in einem Überlappungsbereich (5) überlappen, wobei der innenliegende und der außenliegende Riemenabschnitt in einem Befestigungsbereich (6) fest miteinander verbunden sind, einer Bügelschnalle (7) mit mindestens einem Dom (8), wobei die Bügelschnalle (7) in dem außenliegenden Riemenabschnitt (4) angeordnet ist, im geschlossenen Zustand des Halsriemens (2) in die Bügelschnalle (7) ein gelochter Abschnitt (9) eingeschnallt ist, welcher außerhalb des Befestigungsbereichs (6) in einem freiliegenden Teil des außenliegenden Riemenabschnitts (4) gebildet ist, und der gelochte Anschnitt (9) zum Ausbilden einer Längenverstellbarkeit eine sich in Längsrichtung des Halsriemens (2) erstreckende Anordnung von beabstandeten Löchern (10) zur Aufnahme des mindestens einen Doms (8) aufweist, und einer Leinenbefestigung (15), die an dem innenliegenden Riemenabschnitt (3) befestigt und eingerichtet ist, an eine Leine gekoppelt zu werden, und bei der der außenliegende Riemenabschnitt (4) durch eine Öffnung (14) gesteckt und hierin verschiebbar aufgenommen ist. (Fig. 1)

## Beschreibung

### Hintergrund

Halsbänder für Tiere, insbesondere Hunde oder Katzen, sind in verschiedenen Ausführungen bekannt. Beispielsweise können sich die Halsbänder bezüglich des für den Halsriemen verwendeten Materials unterscheiden, wobei zum Beispiel Natur- oder Kunstleder sowie Riemen aus einem gewebten Material zum Einsatz kommen können. Zum Öffnen und zum Schließen verfügen die Tierhalsbänder üblicherweise über eine Schnalle, wobei verschiedene Ausgestaltungen von Schnallen verwendet werden können. So sind Steckschnallen oder Bügelschnallen bekannt, sei es aus Kunststoff oder Metall.

Zum Befestigen einer Handleine an dem Tierhalsband verfügt dieses über eine Leinenbefestigung, an der die Handleine bevorzugt lösbar befestigt werden kann.

### Zusammenfassung

Aufgabe der Erfindung ist es, ein längenverstellbares Tierhalsband mit verbesserten Nutzungseigenschaften anzugeben, insbesondere hinsichtlich des Tragekomforts für das Tier. So soll zum Beispiel die Zugbeanspruchung beim Führen an der Leine möglichst minimiert werden.

Die Aufgabe wird gelöst durch ein längenverstellbares Tierhalsband nach dem unabhängigen Anspruch 1. Ausgestaltungen sind Gegenstand von abhängigen Unteransprüchen.

Nach einem Aspekt ist ein längenverstellbares Tierhalsband geschaffen, welches einen Halsriemen aufweist, bei dem sich im geschlossenen Zustand ein innenliegender und ein außenliegender Riemenabschnitt in einem Überlappungsbereich überlappen, wobei der außenliegende und der innenliegende Riemenabschnitt in einem Befestigungsbereich fest miteinander verbunden sind.

Das Tierhalsband weist weiterhin eine Bügelschnalle mit mindestens einem Dorn auf, die in dem außenliegenden Riemenabschnitt angeordnet ist. Im geschlossenen Zustand des Halsriemens ist in die Bügelschnalle ein gelochter Abschnitt eingeschnallt, welcher außerhalb des Befestigungsbereichs in einem freiliegenden Teil des außenliegenden Riemenabschnitts gebildet ist. Der gelochte Abschnitt weist zum Ausbilden einer Längenverstellbarkeit eine sich in Längsrichtung des Halsriemens erstreckende Anordnung von beabstandeten Löchern zur Aufnahme des mindestens einen Doms auf. Das längenverstellbare Tierhalsband weist weiterhin eine Leinenbefestigung auf, die an dem innenliegenden Riemenabschnitt befestigt und eingerichtet ist, an eine Leine gekoppelt zu werden, und bei der der außenliegende Riemenabschnitt durch eine Öffnung gesteckt und hierin verschiebbar aufgenommen ist.

Bei dem längenverstellbaren Tierhalsband ist mittels des vorgesehenen konstruktiven Aufbaus eine Zugentlastung geschaffen, mit der der Tragekomfort für das Tier bei angelegtem Halsband mit Bügelschnalle verbessert ist. Es können beliebige Riemenmaterialien für den Halsriemen zum Einsatz kommen, beispielsweise auch Lederriemen, sei es Natur- oder Kunstleder. Alternativ können Riemen aus gewebten Kunststoffmaterialien verwendet werden. Ausführungen können vorgesehen sein, bei denen zumindest der gelochte Abschnitt des außenliegenden Riemenabschnitts als mehrlagiger Riemen ausgeführt ist, zum Beispiel ein mindestens doppellagiger Riemen aus einem gewebten oder geflochtenen Kunststoffmaterial.

Der Halsriemen kann auf einer Innenseite eine Polsterung aufweisen, die sich von einem Ende des innenliegenden Riemenabschnitts bis hin zu einer Befestigung der Bügelschnalle an dem Halsriemen oder in einen Bereich benachbart hierzu erstreckt. Die Polsterung auf der Innenseite kann durchgehend oder unterbrochen ausgebildet sein. Vergleichbar der Erstreckung der Polsterung entlang des Halsriemens kann vorgesehen sein, ein Material mit einer lichtreflektierenden Oberfläche entlang des Rands ein- oder beidseitig anzuordnen, beispielsweise mindestens vom Ende des innenliegenden Riemenabschnitts bis hin zur Befestigung der Bügelschnalle oder in den Bereich benachbart hierzu.

Die Leinenbefestigung des längenverstellbaren Tierhalsbandes kann am Ende des innenliegenden Riemenabschnitts angeordnet sein. Bei dieser oder anderen Ausführungsformen kann die Aufnahme der Leinenbefestigung, bei der es sich beispielsweise um ein Bauteil aus Metall oder Kunststoff handeln kann, insbesondere einen Ring oder eine Platte mit Durchbrüchen, an dem innenliegenden Riemenabschnitt mittels einer am innenliegenden Riemenabschnitt gebildeten Schlaufe erfolgen. Zum Ausbilden der Schlaufe kann ein Ende des Riemens umgeschlagen sein. Das Befestigen kann mittels Nähten und / oder Nieten ausgeführt sein.

Im Befestigungsbereich kann ein in Bezug auf die Bügelschnalle distales Ende des außenliegenden Riemenabschnitts an dem innenliegenden Riemenabschnitt befestigt sein. Die Befestigung kann mittels Aufnähen des außenliegenden Riemenabschnitts auf den innenliegenden Riemenabschnitt ausgeführt sein. Alternativ oder ergänzend kann genietet werden.

Im Befestigungsbereich kann ein Aufhänger an dem Halsriemen angeordnet sein. Der Aufhänger kann aus einem Kunststoff- und / oder einem Metallmaterial bestehen und wenigstens einen Durchbruch aufweisen. Der Aufhänger kann in einer Schlaufe schwenkbar aufgenommen sein.

Der Aufhänger kann an einem im Befestigungsbereich zwischen den innenliegenden und den außenliegenden Riemenabschnitt eingelegten Befestigungsabschnitt angeordnet sein. Der Befestigungsabschnitt kann gemeinsam mit dem außenliegenden Riemenabschnitt auf den innenliegenden Riemenabschnitt aufgenäht sein. Ergänzend oder alternativ kann die Verwendung eines oder mehrerer Nieten vorgesehen sein.

Der gelochte Abschnitt des längenverstellbaren Tierhalsbands kann sich vom Befestigungsbereich ausgehend erstrecken. Bei dieser Ausführungsform kann der sich von dem Befestigungsbereich ausgehend erstreckende Abschnitt des außenliegenden Riemenabschnitts, welcher in die Bügel schnalle eingeschnallt wird, im Wesentlichen vollständig von dem gelochten Abschnitt erfasst sein.

Auf dem außenliegenden Riemenabschnitt kann zwischen der Bügelschnalle und der Leinenbefestigung ein Riemenführungselement angeordnet sein, welches eingerichtet ist, im geschlossenen Zustand des Halsriemens einen durch die Bügelschnalle hindurch gesteckten Teil des außenliegenden Riemenabschnitts aufzunehmen. Das Riemenführungselement kann als ein Stopper ausgeführt sein, welcher ein Lösen des außenliegenden Riemenabschnitts mit der Bügelschnalle durch die Öffnung der Leinenbefestigung verhindert. Mit Hilfe des Riemenführungselements wird der durch die Bügelschnalle hindurchgesteckte Teil des außenliegenden Riemenabschnitts geführt und gehalten. Das Riemenführungselement kann aus einem Kunststoffmaterial bestehen. Es kann ein flexibel verformbares Riemenführungselement vorgesehen sein.

Das Riemenführungselement kann auf dem außenliegenden Riemenabschnitt lösbar angeordnet sein. Eine lösbare Ausgestaltung des Riemenführungselements kann beispielsweise mit einem Kunststoffelement gebildet sein, welches zum Beispiel mit Hilfe des Zusammendrückens verformbar und so von dem außenliegenden Riemenabschnitt lösbar sein kann.

Das Riemenführungselement kann ein Sicherungselement aufweisen, zum Beispiel einen Vorsprung, welches bei in das Riemenführungselement eingeführtem gelochtem Abschnitt des außenliegenden Riemenabschnitts in ein Loch der Anordnung von beabstandeten Löchern eingreift. Das Sicherungselement kann nach innen in Richtung eines Durchbruchs des Riemenführungselements gerichtet sein. Das Sicherungselement kann auf einer Innenseite des Ringführungselements, welches beispielsweise zylindrisch ausgebildet ist, angeordnet sein.

Die Leinebefestigung kann eine weitere Öffnung aufweisen, die von der Öffnung getrennt gebildet und eingerichtet ist, ein Leinenbefestigungsmittel aufzunehmen. Die weitere Öffnung kann oberhalb der Öffnung angeordnet sein. Die weitere Öffnung kann hinsichtlich ihrer Querschnittsfläche kleiner ausgebildet sein als die Öffnung, durch welche der außenliegende Riemenabschnitt hindurchgesteckt ist.

Bei der Leinebefestigung kann eine Befestigungsschlaufe, mittels welcher die Leinebefestigung an dem innenliegenden Riemenabschnitt befestigt ist, durch die Öffnung geführt sein. Auf diese Weise sind der außenliegende Riemenabschnitt sowie die Befestigungsschlaufe gemeinsam durch die Öffnung der Leinenbefestigung hindurchgeführt.

### Beschreibung von Ausführungsformen

Im Folgenden werden unter Bezugnahme auf Figuren einer Zeichnung weitere Ausführungsformen erläutert. Hierbei zeigen:
Fig. 1 eine perspektivische Darstellung eines längenverstellbaren Tierhalsbands im geöffneten Zustand und
Fig. 2 eine perspektivische Darstellung des längenverstellbaren Tierhalsbands im geschlossenen Zustand.

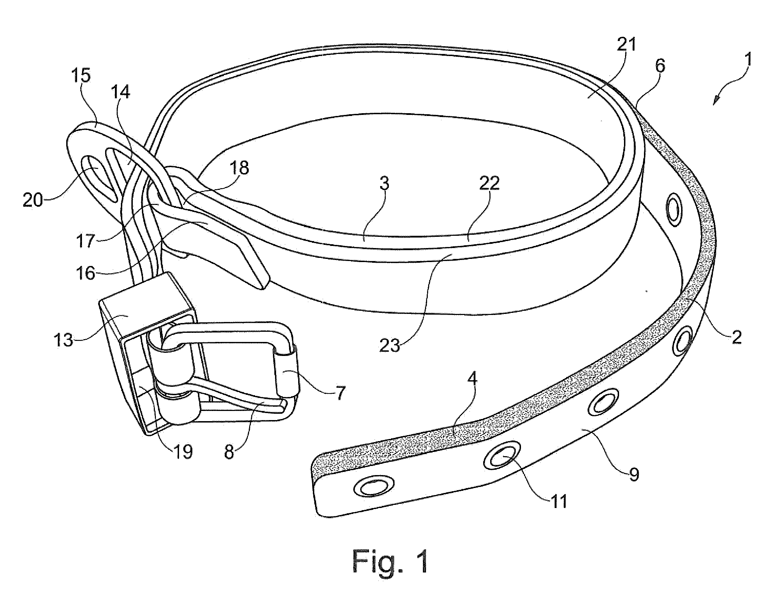

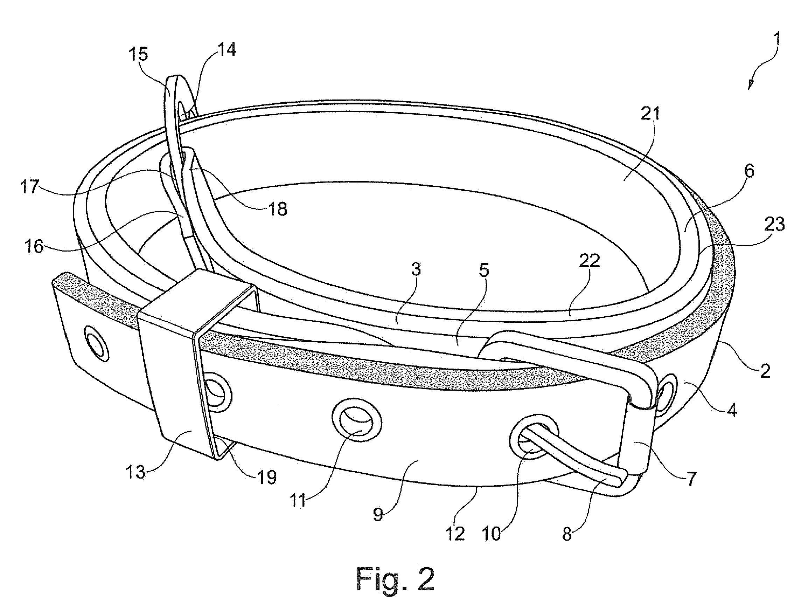

Unter Bezugnahme auf die Fig. 1 und 2 werden nachfolgend Ausführungsbeispiele für ein Tierhalsband 1 beschrieben. Fig. 1 zeigt das Tierhalsband 1 im geöffneten Zustand, wohingegen das Tierhalsband in Fig. 2 im geschlossenen Zustand gezeigt ist.

Das Tierhalsband 1 weist einen Halsriemen 2 auf, der aus unterschiedlichen Materialien bestehen kann, wozu zum Beispiel Natur- oder Kunstleder sowie Kunststoffmaterialien gehören, beispielsweise in gewebter Form. Im geöffneten Zustand (vgl. Fig. 1) ist der Halsriemen 2 in zwei Riementeile geteilt.

Gemäß Fig. 2 überlappen im geschlossenen Zustand ein innenliegender Riemenabschnitt 3 und ein außenliegender Riemenabschnitt 4 in einem Überlappungsbereich 5.

Der außenliegende Riemenabschnitt 4 ist an dem innenliegenden Riemenabschnitt 3 in einem Befestigungsbereich 6 fest verbunden, so dass die beiden Riemenabschnitte im Befestigungsbereich 6 in ihrer Relativlage zueinander fixiert sind. Bei dem gezeigten Ausführungsbeispiel erfolgt die Befestigung mittels Vernähen. Benachbart zum Befestigungsbereich 6 ist ein Aufhänger angeordnet (nicht dargestellt), welcher in einer Schlaufe oder Lasche aufgenommen ist, die mit Hilfe eines zwischen dem innenliegenden und dem außenliegenden Riemenabschnitt 3, 4 eingelegten Bands gebildet ist.

Im außenliegenden Riemenabschnitt 4 ist eine Bügelschnalle 7 angeordnet, die einen Dorn 8 aufweist. In die Bügelschnalle 7 ist ein gelochter Abschnitt 9 des außenliegenden Riemenabschnitts 4 eingeschnallt, indem der Dorn 8 in ein Loch 10 einer Anordnung von Löchern 11 entlang des gelochten Abschnitts 9 eingreift.

Ein durch die Bügelschnalle 7 hindurchgesteckter Endabschnitt 12 wird mit Hilfe eines Riemenführungselements 13 aufgenommen, welches hinter der Bügelschnalle 7 auf dem außenliegenden Riemenabschnitt 4 verschiebbar angeordnet ist. Im Bereich hinter der Bügelschnalle 7 (vgl. Fig. 2) überlappen sich Teile des außenliegenden Riemenabschnitts 4, wobei das Ausmaß der Überlappung davon abhängt, wie weit der gelochte Abschnitt 9 durch die Bügelschnalle 7 hindurch gesteckt ist.

Der außenliegende Riemenabschnitt 4 erstreckt sich ausgehend von einer Öffnung 14 einer Leinenbefestigung 15, durch welche hindurch der Halsriemen 2 geführt ist und welche ihrerseits an einem Ende 16 des innenliegenden Riemenabschnitts 3 in einer Schlaufe 17 aufgenommen ist. Die Schlaufe 17 ist mittels eines endseitig umgeschlagenen Riemenabschnitts 18 gebildet. Die Schlaufe 17 sowie der Halsriemen 2 sind gemeinsam durch die Öffnung 14 geführt.

Mittels der Überlappung des innenliegenden Riemenabschnitts 3 und des außenliegenden Riemenabschnitts 4 im Überlappungsbereich 5 ist hinsichtlich des Zugs an der Leinenbefestigung 15 eine Zugentlastung bereitgestellt, welche insbesondere die geschlossenen Bügelschnalle 7 von der Zugbeanspruchung entlastet.

Das Riemenführungselement 13 wirkt als Stopper, um ein unbeabsichtigtes Herausrutschen des außenliegenden Riemenabschnitts 4 aus der Öffnung 14 zu verhindern. Im geöffneten Zustand (vgl. Fig. 1) kann das Riemenführungselement 13, welches bei der gezeigten Ausführungsform aus einem Kunststoffmaterial besteht, von dem außenliegenden Riemenabschnitt 4 über die Bügelschnalle 7 abgezogen werden, so dass dann die Bügelschnalle 7 durch die Öffnung 14 in der Leinenbefestigung 15 hindurchgesteckt und hiervon gelöst werden kann.

Am Riemenführungselement 13 ist ein Vorsprung 19 gebildet, welcher im geschlossenen Zustand des Tierhalsbandes 1 in ein zugeordnetes Loch eingreift.

Die Leinenbefestigung 15 weist eine weitere Öffnung 20 auf, an der eine Handleine lösbar befestigt werden kann.

Bei der gezeigten Ausführungsform ist eine Polsterung 21 innenseitig vorgesehen.

Entlang eines Rands 22 erstreckt sich ein eingenähtes Material 23, welches lichtreflektierend ist.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Längenverstellbares Tierhalsband (1), mit
- einem Halsriemen (2), bei dem sich im geschlossenen Zustand ein innenliegender und ein außenliegender Riemenabschnitt (3, 4) in einem Überlappungsbereich (5) überlappen, wobei der innenliegende und der außenliegende Riemenabschnitt in einem Befestigungsbereich (6) fest miteinander verbunden sind,
- einer Bügelschnalle (7) mit mindestens einem Dorn (8), wobei
- die Bügelschnalle (7) in dem außenliegenden Riemenabschnitt (4) angeordnet ist,
- im geschlossenen Zustand des Halsriemens (2) in die Bügelschnalle (7) ein gelochter Abschnitt (9) eingeschnallt ist, welcher außerhalb des Befestigungsbereichs (6) in einem freiliegenden Teil des außenliegenden Riemenabschnitts (4) gebildet ist, und
- der gelochte Anschnitt (9) zum Ausbilden einer Längenverstellbarkeit eine sich in Längsrichtung des Halsriemens (2) erstreckende Anordnung von beabstandeten Löchern (10) zur Aufnahme des mindestens einen Doms (8) aufweist, und
- einer Leinenbefestigung (15), die an dem innenliegenden Riemenabschnitt (3) befestigt und eingerichtet ist, an eine Leine gekoppelt zu werden, und bei der der außenliegende Riemenabschnitt (4) durch eine Öffnung (14) gesteckt und hierin verschiebbar aufgenommen ist.

2. Längenverstellbares Tierhalsband (1) nach Anspruch 1, **dadurch gekennzeichnet, dass** der Halsriemen (2) auf einer Innenseite eine Polsterung (21) aufweist, die sich von einem Ende des innenliegenden Riemenabschnitts (3) bis hin zu einer Befestigung der Bügelschnalle (7) an dem Halsriemen (2) oder in einen Bereich benachbart hierzu erstreckt.

3. Längenverstellbares Tierhalsband (1) nach Anspruch 1 oder 2, **dadurch gekennzeichnet, dass** die Leinenbefestigung (15) am Ende des innenliegenden Riemenabschnitts (3) angeordnet ist.

4. Längenverstellbares Tierhalsband (1) nach mindestens einem der vorangehenden Ansprüche, **dadurch gekennzeichnet, dass** im Befestigungsbereich (6) ein in Bezug auf die Bügelschnalle (7) distales Ende des außenliegenden Riemenabschnitts (4) an dem innenliegenden Riemenabschnitt (3) befestigt ist.

5. Längenverstellbares Tierhalsband (1) nach mindestens einem der vorangehenden Ansprüche, **dadurch gekennzeichnet, dass** im Befestigungsbereich (6) ein Aufhänger an dem Halsriemen (2) angeordnet ist.

6. Längenverstellbares Tierhalsband (1) nach Anspruch (5), **dadurch gekennzeichnet, dass** der Aufhänger an einem im Befestigungsbereich (6) zwischen den innenliegenden und den außenliegenden Riemenabschnitt (3, 4) eingelegten Befestigungsabschnitt angeordnet ist.

7. Längenverstellbares Tierhalsband (1) nach mindestens einem der vorangehenden Ansprüche, **dadurch gekennzeichnet, dass** sich der gelochte Abschnitt (9) vom Befestigungsbereich (6) ausgehend erstreckt.

8. Längenverstellbares Tierhalsband (1) nach mindestens einem der vorangehenden Ansprüche, **dadurch gekennzeichnet, dass** auf dem außenliegenden Riemenabschnitt (4) zwischen der Bügelschnalle (7) und der Leinenbefestigung (15) ein Riemenführungselement (13) angeordnet ist, welches eingerichtet ist, im geschlossenen Zustand des Halsriemens (2) einen durch die Bügelschnalle (7) hindurch gesteckten Teil des außenliegenden Riemenabschnitts (4) aufzunehmen, und als ein Stopper ausgeführt ist, welcher ein Lösen des außenliegenden Riemenabschnitts (4) mit der Bügelschnalle (7) durch die Öffnung (14) der Leinenbefestigung (15) verhindert.

9. Längenverstellbares Tierhalsband (1) nach Anspruch 8, **dadurch gekennzeichnet, dass** das Riemenführungselement (13) auf dem außenliegenden Riemenabschnitt (4) lösbar angeordnet ist.

10. Längenverstellbares Tierhalsband (1) nach Anspruch 8 oder 9, **dadurch gekennzeichnet, dass** das Riemenführungselement (13) ein Sicherungselement (19) aufweist, welches bei in das Riemenführungselement (13) eingeführtem gelochtem Abschnitt (9) des außenliegenden Riemenabschnitts (4) in ein Loch (11) der Anordnung von beabstandeten Löchern (10) eingreift.

11. Längenverstellbares Tierhalsband (1) nach mindestens einem der vorangehenden Ansprüche, **dadurch gekennzeichnet, dass** die Leinebefestigung (15) eine weitere Öffnung (20) aufweist, die von der Öffnung (14) getrennt gebildet und eingerichtet ist, ein Leinenbefestigungsmittel aufzunehmen.

12. Längenverstellbares Tierhalsband (1) nach mindestens einem der vorangehenden Ansprüche, **dadurch gekennzeichnet, dass** bei der Leinebefestigung (15) eine Befestigungsschlaufe (17), mittels welcher die Leinebefestigung (15) an dem innenliegenden Riemenabschnitt (3) befestigt ist, die Öffnung (14) geführt ist.
